# NOUVEAU FASCICULE DE BREVET EUROPEEN

(11) **EP 1 556 833 B2**
(45) Date de publication et mention de la décision concernant l'opposition: **26.09.2018**
(45) Mention de la délivrance du brevet: 25.08.2010
(21) Numéro de dépôt: 03782514.8
(22) Date de dépôt: 30.10.2003
(51) Int. Cl.: G06K 19/077

(54) **JEU DE CARTES À MICROCIRCUIT PRÉDÉCOUPÉES DANS UN MÊME SUPPORT PLASTIQUE ET COMPORTANT DES FONCTIONS COMPLÉMENTAIRES**
MIKROCHIP-KARTEN, DIE VORGESTANZT IN EINEM GEMEINSAMEN PLASTIKTRÄGER ANGEORDNET SIND UND KOMPLEMENTÄRE FUNKTIONEN AUFWEISEN
SET OF MICROCIRCUIT CARDS PRECUT IN A COMMON PLASTIC SUPPORT AND COMPRISING COMPLEMENTARY FUNCTIONS

(30) Priorité: 31.10.2002 FR 0213691
(43) Date de publication de la demande: 27.07.2005
(73) Titulaire: IDEMIA France, 92700 Colombes (FR)
(72) Inventeur: HUOT, Jean-Claude, F-78350 Jouy-en-Josas (FR)
(74) Mandataire: Santarelli
(86) Numéro de dépôt international: PCT/FR2003/003243
(87) Numéro de publication internationale: WO 2004/042651

(56) Documents cités:
- EP-A- 0 495 216
- EP-A- 1 065 633
- DE-U- 29 504 542
- FR-A- 2 783 750
- US-A1- 2002 023 963

## Description

La présente invention concerne les cartes à microcircuits prédécoupées dans un support plastique.

Dans le domaine des cartes à microcircuits, dites aussi cartes à puces, la taille et la forme des cartes est définie par des normes largement utilisées dans l'industrie. On connaît notamment le format ID-000 utilisé principalement pour les cartes d'identification des abonnés des opérateurs de téléphonie mobile, appelées plug-in SIM (Subscriber Identification Module) dans le cas des téléphones GSM, et le format ID-1 (issu de la norme IS0 7810), utilisé par exemple pour les cartes bancaires.

Les coûts de fabrication et de logistique d'une carte au format ID-000 sont théoriquement sensiblement inférieurs à ceux d'une carte au format ID-1, en raison notamment de l'économie de matière plastique, de surface à imprimer, de volume et de poids de transport et de stockage.

Cependant, dans le domaine de la téléphonie mobile, les cartes sont commercialisées sous la forme de cartes à microcircuit au format ID-000 prédécoupées dans un corps de carte au format ID-1. Avant de l'insérer dans son téléphone mobile, l'abonné détache alors la carte à microcircuit au format ID-000 du support au format ID-1.

Cela s'explique par le fait qu'une telle carte, avec son corps de carte, est compatible avec les anciens modèles de téléphone mobile qui utilisaient des cartes au format ID-1. Un tel montage permet aussi au fabriquant de cartes de standardiser au maximum les étapes de fabrication des cartes jusqu'au pré-découpage de la carte ID-000, puisque le microcircuit de la carte ID-000 se trouve localisé à l'endroit du microcircuit d'une carte ID-1.

L'invention propose une nouvelle configuration en ce sens qu'elle propose un ensemble d'un support plastique et d'un jeu d'au moins deux cartes à microcircuit pour des dispositifs de téléphonie qui sont mobiles l'un par rapport à l'autre, chacune de ces cartes constituant une carte d'identification d'un souscripteur d'un opérateur de télécommunications mobiles, ces cartes étant prédécoupées dans ledit support plastique constituant un support commun portant ces cartes, au moins l'une desdites cartes à microcircuit comportant des moyens de mise en oeuvre d'une fonction spécifique d'une autre des cartes à microcircuit, ces moyens comportant une zone de mémorisation comportant un identifiant d'une deuxième desdites cartes à microcircuits, les cartes partageant cette fonction restant physiquement liées de la production à la commercialisation.

On connaît certes, d'après le document EP - A - 0 495 216, une carte d'identification comportant une carte miniature prédécoupée à propos de laquelle il est envisagé de prévoir une autre carte miniature prédécoupée, mais de telles cartes miniatures sont des cartes d'identification totalement indépendantes l'une de l'autre d'un point de vue fonctionnel, indépendamment de tout contexte de téléphonie mobile.

Par ailleurs on connaît d'après le document EP - A - 1 065 633 un dispositif de téléphonie mobile comportant plusieurs supports à puce, mais ceux-ci sont de types différents, en ayant des fonctions spécifiques que n'existent pas dans les autres (l'un des supports sert à établir des communications, l'autre contient une application indépendante tandis que la troisième gère la mise en oeuvre de cette application), de sorte que ces supports de carte ne peuvent pas être implantés dans des dispositifs de téléphonie mobiles l'un par rapport à l'autre.

Enfin, on connaît d'après le document US - A 2002/023963 une carte comportant plusieurs modules à microcircuit, mais ces modules sont solidaire d'un même support et sont disposés de telle sorte qu'un seul module puisse être en service à la fois, les autres n'étant pas connectés.

L'invention découle d'une approche originale des besoins, faisant intervenir plusieurs constatations, la première étant que l'intérêt d'une telle compatibilité entre format ID-1 et ID-000 est devenu quasiment nul, car, notamment, les anciens modèles de téléphones mobiles ont pratiquement disparu. Cela devrait conduire à conclure que le support de positionnement que constitue le corps de carte au format ID-1 en service dans un ancien modèle de téléphone mobile n'a plus de raison d'être et peut donc être supprimé, avec les avantages de réduction de matière, de masse et de volume qui peuvent être associés à une telle suppression. Mais une autre constatation a été qu'il subsiste un intérêt à avoir pour une carte un support, notamment pour son positionnement, non plus en service dans un ancien modèle de téléphone mobile, mais en cours de fabrication voire plus tard ; enfin, l'analyse des besoins a montré qu'il y a un intérêt à introduire, au cours de la fabrication ou au cours de la commercialisation, une notion de jeu de cartes destinées à avoir une complémentarité ; enfin il a pu être constaté que la notion de jeu de cartes n'interdisait pas de continuer à prévoir que le corps de carte serve au positionnement de l'une des cartes à microcircuit dans un téléphone d'un ancien modèle.

Ainsi, selon l'invention, on donne au corps de carte la nouvelle fonction de support de plusieurs cartes à microcircuit.

Le fait d'avoir deux cartes à microcircuit montées dans un même support (en pratique en plastique) permet d'économiser, par rapport à la configuration actuelle, les coûts liés à un second support plastique, qu'il s'agisse des coûts de fabrication ou des coûts de logistique. Par exemple, si on place deux cartes à microcircuits sur le même support au lieu d'une seule carte à microcircuit par support plastique, on économise 50% de la matière plastique dudit support plastique, 50% des coûts liés à l'impression dudit support plastique ; le volume et le poids des cartes est également divisé par deux. Il faut noter ici que dans le domaine de la carte à microcircuit, les volumes sont importants, la production d'une unité de fabrication moyenne (300 personnes) pouvant facilement attendre plusieurs millions d'unités par an. On comprend donc aisément l'impact de telles réductions de coûts.

De manière avantageuse, ledit support plastique est à un format standard, de préférence au format ID-1. Grâce à un tel support, qui est au format le plus répandu, on peut alors continuer à utiliser les procédés classiques de fabrication, sans avoir besoin de faire des investissements en nouveaux moyens de production. Il peut être noté ici que la localisation du microcircuit d'une carte au format ID-1 (qui est la même pour les raisons de compatibilité précitées que celle du microcircuit d'une carte au format ID-000 prédécoupée au sein d'un support au format ID-1) n'est pas centrale : il est donc aisé d'utiliser les procédés classiques de fabrication, avec des modifications mineures, pour implanter deux microcircuits sur un même support (et donc deux petites cartes prédécoupées), par exemple en prévoyant d'inverser le sens du support avant d'implanter le deuxième microcircuit.

En ce qui concerne lesdites cartes à microcircuits, le format ID-000 est tout particulièrement adapté. Le montage de deux cartes sur un même support est facilité par sa petite taille (en combinaison avec la localisation non centrale des microcircuits, voir ci-dessus). De plus, les fabricants ont, depuis plusieurs années, une bonne maîtrise de l'industrialisation du pré-découpage pour ce format.

Avantageusement, les modules desdites cartes à microcircuit (on désigne par "module" le microcircuit conjointement avec ses contacts) sont sur une même face dudit support plastique. Lors de la fabrication, on peut ainsi effectuer la même opération sur lesdites deux cartes à microcircuit sans avoir à retourner ledit même support plastique.

Indépendamment de ces aspects physiques des cartes à microcircuits, dans le domaine des télécommunications mobiles notamment, on peut déceler, à l'état embryonnaire, l'intérêt de doter une carte à microcircuit d'une fonction spécifique d'une (ou plusieurs) autre carte à microcircuit, c'est à dire d'établir un lien privilégié d'une carte vers une autre carte. On peut citer par exemple la réduction de tarif accordée à un abonné, dans ses communications avec un numéro choisi ; il peut y avoir une fonction spécifique en sens inverse (ou réciproque), auquel cas on peut parler de fonction commune (une fonction de réduction de tarif, dans le cas envisagé).

C'est pourquoi les cartes à microcircuit portées par un support commun sont avantageusement liées l'une à l'autre, dans au moins un sens, par une fonction de l'une qui est spécifique de l'autre ; bien entendu l'autre carte peut avoir une fonction spécifique de la première, chacune de ces fonctions contribuant à l'accomplissement d'une fonction commune (réciproque ou non), ce qui les rend complémentaires l'une de l'autre. Ainsi, de la production à la commercialisation, comme elles sont montées sur le même support, les deux cartes à microcircuit liées partageant une même fonction restent physiquement liées. Elles peuvent être ainsi traitées par couple, sans gestion complexe, et sans risques de confusion ou de séparation, notamment durant la personnalisation ou le transport. Cela se généralise à des jeux de trois cartes, voire plus.

Le domaine des télécommunications mobiles est particulièrement bien adapté à la mise en oeuvre de l'invention. En effet, les souscripteurs de chaque opérateur, typiquement les abonnés ou les détenteurs de cartes prépayées, disposent généralement de cartes à microcircuits d'identification. Comme on le montrera plus loin, dans le cas où lesdites deux cartes à microcircuits sont des cartes d'identification d'un souscripteur d'un opérateur de télécommunication, on peut concevoir de nombreuses possibilités pour ladite fonction spécifique.

Par exemple, ladite fonction spécifique peut mettre en oeuvre une gestion en commun des coûts des télécommunications. Cela peut être avantageux dans le cas où un souscripteur dispose d'un téléphone portable et d'un ordinateur portable utilisant un modem adapté à communiquer avec un réseau de télécommunication mobile. Le souscripteur peut placer l'une desdites cartes à microcircuit dans le modem de l'ordinateur et l'autre dans son téléphone portable, et bénéficier d'une gestion en commun des coûts des communications de l'ordinateur et du téléphone portable sur un compte unique auprès de l'opérateur de télécommunications ; cela peut s'analyser comme une fonction qui attribue les coûts générés par l'une des cartes à l'autre carte (ce qui correspond à la notion de fonction spécifique à sens unique précitée) ou l'attribution des coûts générés par l'une ou l'autre des cartes à un compte commun, attribuable à aucune des cartes en particulier, auquel cas on peut bien parler de fonction commune.

De telles fonctions spécifiques peuvent être gérées, par exemple, au niveau du serveur de l'opérateur de télécommunications mobiles. C'est le cas aujourd'hui pour les télécommunications à tarifs réduits. Le serveur de l'opérateur dispose d'une base de données qui fait correspondre à chaque abonné une liste de numéros à tarifs réduits. Dans une telle configuration, il n'y a pas nécessairement d'adaptation particulière des cartes pour assurer cette fonction partagée.

Toutefois, avantageusement, au moins l'une desdites cartes à microcircuit comporte des moyens de mise en oeuvre de ladite fonction spécifique. On limite de cette façon les inconvénients d'une gestion centralisée par le serveur de l'opérateur (une telle gestion centralisée est en effet coûteuse et complexe en terme de communications et de gestion de bases de données).

En particulier, les moyens de mise en oeuvre desdites fonctions spécifiques peuvent être initialisés dans l'une (ou plusieurs) desdites cartes à microcircuit au moment de la personnalisation ou de la pré-personnalisation.

Ainsi, au moment de la commercialisation desdites cartes à microcircuit, au moins l'une d'elles comporte dans une zone de mémorisation un identifiant de l'autre.

On peut rappeler ici qu'en matière de communications mobiles, le système GSM (en Anglais, Global System for Mobile communications) est aujourd'hui le plus répandu dans le monde. Dans cette norme notamment, l'identifiant d'une carte à microcircuit est appelé le MSISDN (en anglais, Mobile Subscriber Integrated Services Digital Network) qui est en fait le numéro de téléphone à 10 chiffres de l'abonné. Par exemple, au moins l'une desdites cartes à microcircuit pourra comporter le MSISDN de l'autre dans une zone de mémorisation.

Mais il peut y avoir en outre, sur l'autre des cartes (ou sur une autre des cartes, lorsqu'il y en a au total plus de deux), des moyens complémentaires contribuant à l'accomplissement de la fonction spécifique, même lorsque celle-ci est à sens unique.

Quelles que soient les modalités d'implantation d'un lien entre les cartes, on peut concevoir de nombreuse possibilités de fonction spécifique.

En particulier, ladite fonction spécifique implique avantageusement la mise en oeuvre de moyens d'initialisation rapide de communication entre l'une des cartes et au moins une autre carte, grâce à quoi, par exemple, le souscripteur de la première carte peut entrer en communication avec celui d'une autre carte en appuyant sur une seule touche de son téléphone mobile (cela se généralise aisément au cas de plusieurs "autres" cartes en choisissant pour chacune une touche différente, ou au cas où la fonction est réciproque, en prévoyant des moyens d'initialisation sur chaque carte).

En outre, les moyens de mise en oeuvre de ladite fonction spécifique comportent avantageusement des moyens d'accès à une information, propre à une première des cartes à microcircuit, par une deuxième desdites cartes à microcircuit. Lesdites cartes à microcircuits peuvent ainsi échanger, au moins dans un sens, des informations et interagir l'une sur l'autre de façon privilégiée. Ici encore, cette fonction peut être à sens unique ou à double sens.

Afin d'éviter tout accès frauduleux, lesdits moyens d'accès sont avantageusement sécurisés par des moyens cryptographiques. On peut utiliser pour cela des moyens cryptographiques divers, bien connus de l'homme de l'art dans le domaine des cartes à microcircuit, permettant de s'assurer que l'accès à ladite information est bien autorisé.

Avantageusement, lesdits moyen d'accès utilisent un protocole SMS MMS (en Anglais, « Multimedia Messaging Services ») ou similaire, tout particulièrement bien adapté à la communication entre deux cartes à microcircuits intégrées dans deux téléphones mobiles.

Lesdits moyens d'accès peuvent être de plusieurs natures. En particulier, lesdits moyens d'accès peuvent inclure des moyens de simple communication par ladite première carte à microcircuit d'une information à ladite deuxième carte à microcircuit. Lesdits moyens d'accès peuvent également comporter des moyens de modification de ladite information.

De manière également avantageuse, lesdits moyens d'accès peuvent en outre être déclenchés de plusieurs manières. En particulier, lesdits moyens d'accès peuvent comporter de moyens de déclenchement sur requête de ladite deuxième carte à microcircuit, par exemple sur demande du souscripteur de cette carte. Lesdits moyens d'accès peuvent aussi, en variante ou en complément, comporter des moyens de déclenchement automatique, par exemple lorsque ladite première carte change d'état (par exemple, allumé ou éteint).

Lesdits moyens d'accès peuvent permettre de nombreuses applications liant de façon privilégiée lesdites deux cartes à microcircuit. Certaines de ces applications sont particulièrement avantageuses.

C'est ainsi que, en particulier, lesdits moyens d'accès peuvent comporter des moyens permettant d'informer ladite deuxième carte si ladite première carte est en cours de fonctionnement ou non. Par exemple, le matin, lorsque le souscripteur titulaire de ladite première carte à microcircuit allume son téléphone portable, ladite première carte à microcircuit envoie automatiquement un message informant le souscripteur titulaire de ladite deuxième carte à microcircuit que le souscripteur de ladite première carte vient d'allumer son téléphone mobile.

Egalement, lesdits moyens d'accès peuvent comporter des moyens de contrôle des coûts des télécommunications du souscripteur de ladite première carte à microcircuit par ladite deuxième carte. Par exemple, le titulaire de ladite seconde carte à microcircuit peut être informé dès que la consommation en télécommunication du titulaire de la première carte à microcircuit dépasse un certain seuil pour une période donnée. Une telle fonction partagée est un exemple typique de fonction à sens unique.

Comme autre exemple de fonction spécifique on peut citer le cas où, pour le titulaire de la deuxième carte, il peut être intéressant de connaître la position géographique de ladite première carte, par exemple pour savoir approximativement où son souscripteur se trouve.

L'invention sera mieux comprise et d'autres avantages apparaîtront plus clairement à la lumière de la description qui suit, donnée à titre d'exemple illustratif non limitatif et faite en référence aux dessins annexés dans lesquels :
- la figure 1 est une vue de dessus d'une carte à microcircuit conforme à la technique antérieure ;
- la figure 2 est une vue de dessus d'un jeu de cartes à microcircuit dans un mode de réalisation possible de l'invention ;
- la figure 3 est une vue de dessus d'un autre jeu de cartes à microcircuit conforme à l'invention ;
- la figure 4 est un schéma bloc du microcircuit de la carte de la figure 1, conforme à la technique antérieure ;
- la figure 5 est un schéma bloc analogue à la figure 4 des microcircuits du jeu de cartes à puces de la figure 2.

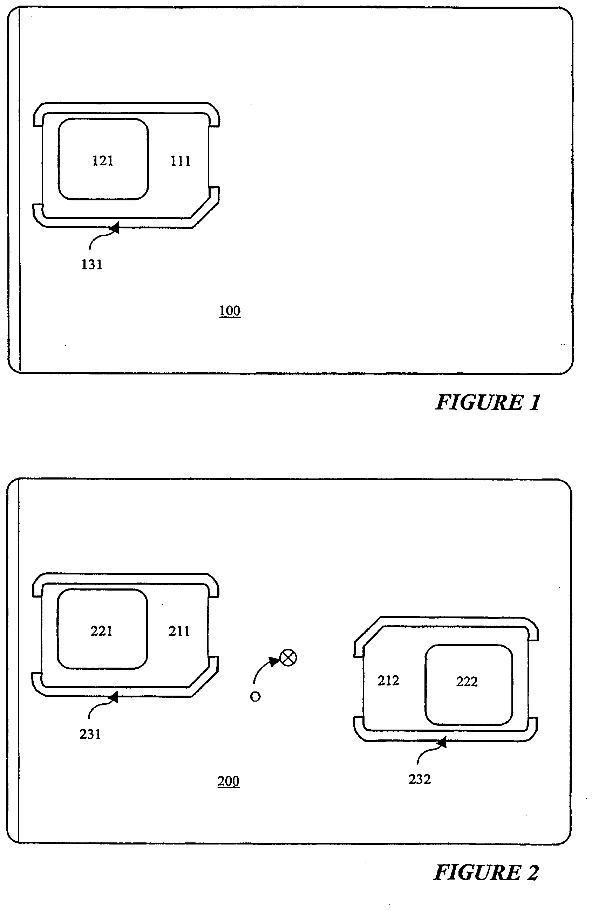

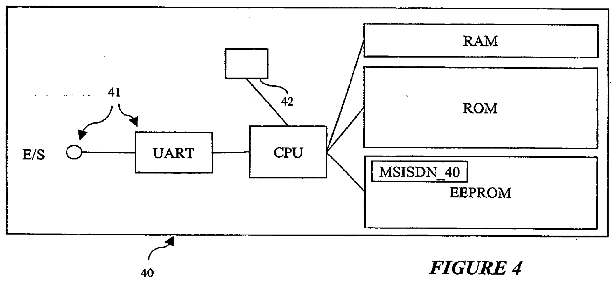

Les figures 1 et 4 représentent l'aspect physique d'une carte classique ainsi que le schéma bloc de son microcircuit.

La figure 1 représente ainsi une carte 100 de grand format, ici le format ID-1, qui comporte un module à microcircuit 121. Au sein de cette carte 100 sont prévues des découpes 131 délimitant partiellement une carte 111 (appelée en pratique "Plug-In SIM"), portant ce module à microcircuit 121, ayant un petit format, ici le format ID-000.

De manière classique, au moment de la mise en service, on met en place le module, soit en le laissant solidaire de la carte 100, soit en le détachant de son support en profitant des découpes 131.

On peut noter que l'emplacement de ce module est excentré vis à vis de la carte 100.

Le module comporte en fait un microcircuit proprement dit et des contacts (non représentés). La figure 4 représente de façon schématique une structure possible de ce microcircuit 40. Celui-ci comporte ainsi un CPU associé, de façon classique, à une unité de calcul cryptographique 42, une interface d'entrée sortie E/S 41, et des mémoires RAM, ROM et EEPROM.

Dans la partie ROM sont classiquement implantés, le système d'exploitation et les programmes informatiques mettant oeuvre les différentes fonctionnalités de la carte.

Dans la partie EEPROM sont classiquement implantés, les données de personnalisation de la carte, par exemple dans le domaine de la téléphonie mobile, le MSISDN de la carte mémorisé dans la zone mémoire MSISDN_40.

La partie RAM est classiquement une mémoire de travail pour le processeur CPU.

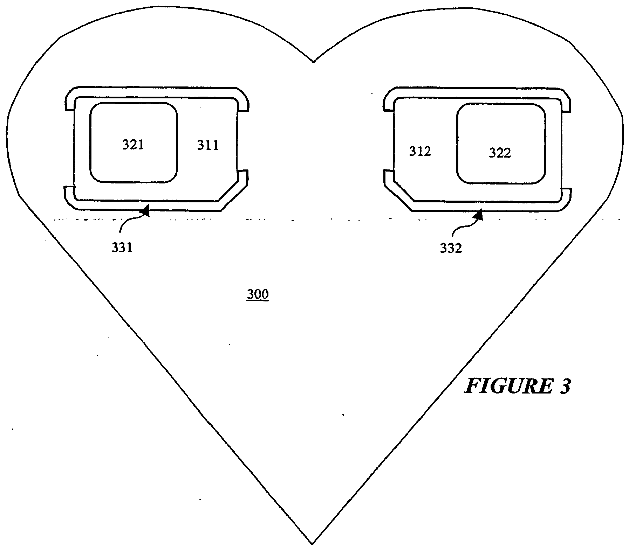

Les figures 2 et 3 représentent deux exemples de jeux de cartes à microcircuit conformes à l'invention. Ces exemples ont en commun de comporter des jeux de deux cartes à microcircuit, dont les modules, donc les microcircuits, sont implantés sur une même face du support commun.

Plus précisément, la figure2 représente un support 200 portant un jeu de deux cartes 211 et 212, comportant chacune un module 221 ou 222, en étant entourée par des découpes 231 ou 232 visant à en faciliter la séparation vis-à-vis du reste du support.

Dans l'exemple représenté, le support 200 a le même format ID-1 que celui de la carte 100 de la figure 1, et la carte 211 de plus petit format ID-000 ainsi que le module 221, occupent dans ce support 200 les mêmes emplacements que la carte 111 et le module 121 dans le support 100. On comprend que la fabrication du support 200 et de la carte 211 peut être obtenue selon les modalités classiques de fabrication d'une carte telle que celle de la figure 1.

Il est néanmoins à noter que le support 200 admet un centre de symétrie noté O et que la carte 212 occupe, dans ce support 200, un emplacement symétrique de celui de la carte 211 vis-à-vis de ce centre. Il en découle que la fabrication de cet ensemble peut être réalisé en deux phases, chacune consistant à réaliser dans le support 200 une petite carte telle que celle 111 de la figure 1, avec une simple rotation de 180° de centre O du support 200 entre les deux phases.

En variante non représentée, les cartes peuvent avoir d'autres formats adaptés aux besoins ; ils peuvent aussi être en nombre quelconque supérieur à 2, et occuper des emplacements quelconques.

La figure 3 représente un jeu de cartes 311 et 312, ici aussi de format ID-000, mais disposées de façon symétrique vis-à-vis d'un axe (ici vertical, non représenté) de leur support. En outre, ce support correspond à un format de fantaisie, ici un coeur. Un tel jeu de cartes, sur un support en forme de coeur, est par exemple destiné à un couple dont chaque membre disposera des mêmes fonctions partagées avec l'autre.

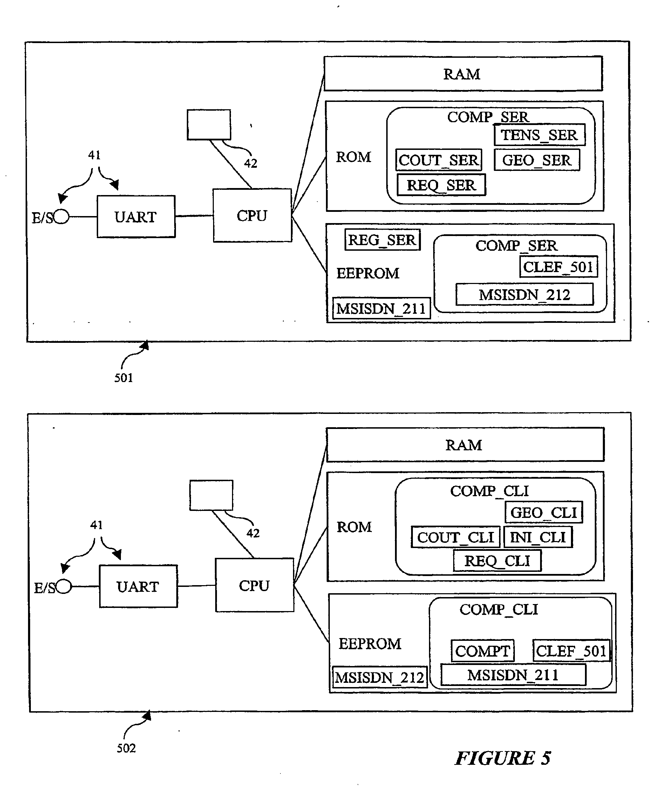

La figure 5 présente conjointement les deux schémas des microcircuits 501 et 502 des modules 221 et 222, respectivement, du jeu de cartes de la figure 2. Dans l'exemple considéré ici, l'une des cartes (211) est un serveur, tandis que l'autre (212) est un client.

Plus précisément les microcircuits 501 et 502 comportent ici, comme celui de la figure 4, un CPU associé à une unité de calcul cryptographique 42, une interface d'entrée sortie E/S 41, et des mémoires RAM, ROM et EEPROM.

La mémoire EEPROM de 501 comporte également une zone MSISDN_211 qui contient le MSISDN de la carte 211. De même, la mémoire EEPROM du microcircuit 502 comporte une zone MSISDN_212 qui contient le MSISDN de la carte 212. Les zones mémoire MSISDN_211 et MSISDN_212 sont créées et initialisées au moment de l'étape de personnalisation des cartes à microcircuit 211 et 212 prédécoupées dans un même support plastique.

Par contre, le microcircuit 501 comporte un serveur mettant à disposition de la carte 212 des informations propres à la carte 211. Ce serveur est constitué une unité COMP_SER de programmes, mémorisées dans une zone de la mémoire ROM, et un ensemble COMP_SER de données, mémorisé dans une zone de la mémoire EEPROM.

Dans l'exemple représenté, l'unité de programme COMP_SER comprend ainsi :
- un programme COUT_SER de gestion des coûts de la carte à microcircuit 211;
- un programme GEO_SER de localisation géographique de la carte à microcircuit 211 ;
- un programme TENS_SER informant la carte 212 à chaque mise sous tension où à chaque mise hors tension de la carte 211 ;
- un programme REQ_SER de gestion des requêtes reçus de la part de la carte à microcircuit 212.

L'ensemble de données COMP_SER du microcircuit 501, comprend, quand à lui, dans une zone mémoire MSISDN_212 le numéro de téléphone MSISDN de la carte 212. La mémoire EEPROM de la carte à microcircuit 212 comprend en outre un fichier REG_SER définissant les règles d'accès au réseau de télécommunication mobile. Ce fichier contient des mots clefs, compréhensibles par le programme COUT_CLI, interdisant ou autorisant, par exemple, les appels internationaux ou les appels de numéros à tarification spéciale réalisés par la carte à microcircuit 212. On peut aussi définir dans cette emplacement mémoire REG_SER des durées d'appel maximum par mois, par exemple, pour des numéro particuliers ou tous les appels.

D'autre part, le microcircuit 502 comporte la partie client permettant d'accéder à des informations de la carte à microcircuit 211. Cette partie client est constitué par une unité COMP_CLI de programmes, mémorisés dans une zone de la mémoire ROM, et un ensemble COMP_CLI de données, mémorisé dans une zone de la mémoire EEPROM.

Dans l'exemple représenté, l'unité de programmes COMP_CLI comprend ainsi :
- un programme COUT_CLI de gestion des coûts de la carte 211 ;
- un programme GEO_CLI de demande de localisation géographique de la carte à microcircuit 211 ;
- un programme INI_CLI d'initialisation rapide de communication vers la carte 211 ;
- un programme REQ_CLI d'envoie à la carte 211 de requêtes d'accès à une information.

De façon analogue au microcircuit 501, l'ensemble de données COMP_CLI du microcircuit 502, comprend, dans une zone mémoire MSISDN_211, le numéro de téléphone MSISDN de la carte 211.

Les unités de programmes COMP_SER et COMP_CLI des deux cartes à microcircuits 211 et 212 communiquent entre elles en utilisant des moyens de mise en oeuvre d'un protocole SMS (en Anglais, « Short Message Service »), non représentés, compris dans une telle carte de façon classique dans le domaine des télécommunications mobiles. De façon connue, on peut insérer une commande enveloppe dans un SMS adressée à une carte de façon à lancer un programme de cette carte avec une liste de paramètres et des données inclus dans cette commande.

Les opérateurs de téléphonie mobile pourront appliquer une facturation spéciale aux SMS échangées par les unités COMP_CLI et COMP_SER de façon à ce que leur coût ne soit pas prohibitif pour les souscripteurs des cartes à microcircuits 211 et 212.

Les deux cartes 211 et 212 disposent aussi de la fonctionnalité STK (En Anglais : SiM Tool Kit) non représentée, également classique dans le domaine des télécommunications mobiles.

En fonctionnement, le programme INI_CLI qui lance un appel téléphonique vers la carte à microcircuit 211 est accessible depuis la racine du menu STK de la carte à microcircuit 212. Le souscripteur titulaire de la carte à microcircuit 212 peut ainsi appeler le souscripteur de la carte à microcircuit 211 en actionnant deux fois le bouton de sélection du téléphone mobile : une première fois pour sélectionner la racine du menu STK de la carte à microcircuit 212 et une deuxième fois pour lancer l'appel du titulaire de la carte à microcircuit 211.

Lorsque le souscripteur de la carte 211 se déplace avec le téléphone mobile dans lequel est inséré la carte 211, le serveur de l'opérateur peut déterminer sa position géographique de façon connue par l'homme de l'art. Le souscripteur peut ainsi connaître sa position en lançant, par l'intermédiaire du menu STK de la carte à microcircuit 211, le programme GEO_SER. Celui-ci interroge alors le serveur de l'opérateur, affiche la position géographique ainsi obtenue sur l'écran du téléphone mobile. Le programme GEO_SER propose ensuite à l'utilisateur de transmettre par SMS cette position géographique à la carte 212. Si l'utilisateur accepte, le programme GEO_SER va lire la zone mémoire MSISDN_212 pour obtenir le numéro de téléphone de la carte 212 afin de transmettre cette position géographique par l'envoie d'un SMS.

Lorsque le souscripteur de la carte 212 souhaite connaître la position de la carte à microcircuit 211 (et donc de son souscripteur), celui-ci peut lancer, par l'intermédiaire du menu STK de la carte 212, le programme GEO_CLI qui transmet une requête d'interrogation du programme GEO_SER de la carte 211 au programme REQ_CLI. Ce dernier utilise alors la clef CLEF_501 et l'unité de calcul cryptographique 42 pour encrypter la requête. Le programme REQ_CLI met ensuite cette requête sous la forme d'une commande enveloppe lançant le programme REQ_SER, avant de l'envoyer par SMS à la carte à microcircuit 211 en lisant le numéro de téléphone de celle-ci dans la zone MSISDN_211 de la mémoire EEPROM. Lorsque la carte 211 reçoit le SMS ainsi envoyé par la carte à microcircuit 212, le programme REQ_SER, activé par la commande enveloppe, décrypte la requête d'interrogation et vérifie sa syntaxe ; ce qui permet d'authentifier qu'elle a bien été envoyée par la carte 212. Le programme REQ_SER transmet ensuite la requête d'interrogation au programme GEO_SER. Ce dernier interroge alors le serveur de l'opérateur pour obtenir la position de la carte 211, puis envoie la réponse à la carte 212 par SMS. Il faut préciser que les cartes à microcircuit 211 et 212 utilisent un compteur de requêtes commun COMPT, incrémenté à chaque envoie ou réception d'une nouvelle requête par l'une des cartes pour éviter qu'on réutilise frauduleusement un message intercepté par exemple sur le réseau.

En variante, la carte 212 peut interroger directement le serveur de l'opérateur pour connaître la position de la carte 211 en s'authentifiant grâce à la clef CLEF_501 et l'unité de calcul cryptographique 42.

Les cartes à microcircuits 211 et 212 ont d'autres fonctions spécifiques l'une de l'autre. Ainsi, à chaque mise sous tension ou hors tension de la carte 211, le programme TENS_SER envoie automatiquement un message SMS informant le souscripteur de la carte 212.

Le titulaire de la carte 212 peut également gérer les coûts de la carte 211. Cela peut être utile, par exemple, lorsque la carte 211 est utilisée par un enfant et que le souscripteur titulaire de la carte 212 est l'un de ses parents. Avant chaque appel de l'enfant, le programme COUT_SER vérifie en lisant la mémoire REG_SER que l'appel est bien autorisé. A la fin de chaque communication, le programme COUT_SER envoie automatiquement un SMS à la carte 212 informant le parent du numéro appelé par l'enfant et de la durée de la communication. Le parent peut en utilisant le programme COUT_CLI, par un mécanisme similaire à celui décrit plus haut pour la localisation géographique, envoyer une requête à la carte 211 pour modifier le contenu de la mémoire REG_SER et donc les règles d'accès pour l'enfant au réseau de télécommunication.

Ainsi la carte à microcircuit 211 comporte des moyens de mise en oeuvre d'une fonction spécifique de la carte à microcircuit 212, et la carte à microcircuit 212 comporte des moyens de mise en oeuvre d'une fonction spécifique de la carte à microcircuit 211.

En variante non représentée, certaines de ces fonctions sont dupliquées, c'est à dire que chacun des utilisateurs peut être serveur ou client vis-à-vis de l'autre ; c'est notamment le cas des fonctions de localisation géographiques et d'envoie et de réception de requêtes mises en oeuvre respectivement par les programmes GEO_CLI, GEO_SER et REQ_CLI, REQ_SER. Chacun des utilisateurs des cartes à microcircuit 211 et 212 peut , par exemple, avoir besoin de connaître la localisation de l'autre.

Bien entendu, la structure des microcircuits est donnée ci-dessus à titre d'exemple non limitatif.

## Revendications

1. Ensemble d'un support plastique et d'un jeu d'au moins deux cartes à microcircuit (211, 212) pour des dispositifs de téléphonie qui sont mobiles l'un par rapport à l'autre, chacune de ces cartes constituant une carte d'identification (211, 212) d'un souscripteur d'un opérateur de télécommunications mobiles, ces cartes étant prédécoupées (231, 232) dans ledit support plastique (200) constituant un support commun portant ces cartes, au moins l'une desdites cartes à microcircuit (211) comportant des moyens (COMP_SER) de mise en oeuvre d'une fonction spécifique d'une autre des cartes à microcircuit, ces moyens comportant une zone (MSISDN_212) de mémorisation comportant un identifiant d'une deuxième desdites cartes à microcircuits (212), les cartes partageant cette fonction restant physiquement liées de la production à la commercialisation.

2. Ensemble selon la revendication 1, **caractérisé en ce que** ledit support plastique (200) est conforme au format ID-1.

3. Ensemble selon la revendication 1 ou la revendication 2, **caractérisé en ce que** ces cartes sont conformes au format ID-000.

4. Ensemble selon l'une quelconque des revendications 1 à 3, **caractérisé en ce que** leurs microcircuits font partie de modules (221, 222) qui sont montés sur une même face dudit support plastique (200).

5. Ensemble selon l'une quelconque des revendications 1 à 4, **caractérisé en ce que** lesdits moyens de mise en oeuvre de ladite fonction spécifique (COMP_CLI) comportent des moyens d'initialisation rapide (INI_CLI) d'une communication entre l'une et une autre desdites cartes à microcircuits.

6. Ensemble selon l'une quelconque des revendications 1 à 5, caractérisé en ce lesdits moyens de mise en oeuvre de ladite fonction spécifique (COMP_SER, COMP_CLI) comportent des moyens d'accès (GEO_SER, GEO_CLI) à une information propre à une première desdites deux cartes à microcircuits (212), par une deuxième desdites deux cartes à microcircuits (211).

7. Ensemble selon la revendication 6, **caractérisé en ce que** lesdits moyens d'accès sont sécurisés par des moyens cryptographiques (CLEF_501).

8. Ensemble selon la revendication 6 ou la revendication 7, **caractérisé en ce que** lesdits moyens d'accès utilisent le protocole de type SMS.

9. Ensemble selon l'une quelconque des revendications 6 à 8, **caractérisé en ce que** lesdits moyens d'accès comportent des moyens de réception (REC_SER) ou d'envoi (REC_CLI) d'une requête d'accès.

10. Ensemble selon l'une quelconque des revendications 6 à 9, caractérisé en ce lesdits moyens d'accès comportent des moyens (TENS_SER) permettant d'informer ladite deuxième carte (212) si ladite première carte (211) est en cours de fonctionnement ou non.

11. Ensemble selon l'une quelconque des revendications 6 à 9, caractérisé en ce lesdits moyens d'accès comportent des moyens (COUT_SER, COUT CLI) de contrôle des coûts des communications du souscripteur de ladite première carte à microcircuit par ladite deuxième carte.

12. Ensemble selon l'une quelconque des revendications 6 à 9, caractérisé en ce lesdits moyens d'accès comportent des moyens (GEO_SER) permettant d'informer ladite deuxième carte de la position géographique de ladite première carte.

## Patentansprüche

1. Baugruppe aus einem Plastikträger und einem Satz von mindestens zwei Mikrochip-Karten (211, 212) für Fernsprechvorrichtungen, die beweglich zueinander sind, wobei jede der Karten eine Identifikationskarte (211, 212) eines Kunden eines Mobilfunkanbieters ist, wobei diese Karten vorgestanzt (231, 232) in dem Plastikträger (200) angeordnet sind, welcher ein die Karten tragender gemeinsamer Träger ist, wobei mindestens eine der Mikrochip-Karten (211) Mittel (COMP_SER) zum Umsetzen einer spezifischen Funktion einer anderen der Mikrochip-Karten aufweist, wobei diese Mittel einen Speicherbereich (MSISDN_212) aufweisen, der eine Kennung einer zweiten der Mikrochip-Karten (212) aufweist, und die Karten, die diese Funktion teilen, von der Herstellung bis zum Vertrieb physisch verbunden bleiben.

2. Baugruppe nach Anspruch 1, **dadurch gekennzeichnet, dass** der Plastikträger (200) dem Format ID-1 entspricht.

3. Baugruppe nach Anspruch 1 oder Anspruch 2, **dadurch gekennzeichnet, dass** diese Karten dem Format ID-000 entsprechen.

4. Baugruppe nach einem der Ansprüche 1 bis 3, **dadurch gekennzeichnet, dass** ihre Mikrochips Bestandteil von Modulen (221, 222) sind, die auf derselben Seite des Plastikträgers (200) angeordnet sind.

5. Baugruppe nach einem der Ansprüche 1 bis 4, **dadurch gekennzeichnet, dass** die Mittel zum Umsetzen der spezifischen Funktion (COMP_CLI) Mittel zum schnellen Aufbau (INI_CLI) einer Kommunikation zwischen der einen und einer anderen der Mikrochip-Karten aufweisen.

6. Baugruppe nach einem der Ansprüche 1 bis 5, **dadurch gekennzeichnet, dass** die Mittel zum Umsetzen der spezifischen Funktion (COMP_SER, COMP_CLI) Zugriffsmittel (GEO_SER, GEO_CLI) auf eine Information aufweisen, die einer ersten der beiden Mikrochip-Karten (212) zugehörig ist, über eine zweite der beiden Mikrochip-Karten (211).

7. Baugruppe nach Anspruch 6, **dadurch gekennzeichnet, dass** die Zugriffsmittel über Verschlüsselungsmittel (CLEF_501) gesichert sind.

8. Baugruppe nach Anspruch 6 oder Anspruch 7, **dadurch gekennzeichnet, dass** die Zugriffsmittel das SMS-Protokoll nutzen.

9. Baugruppe nach einem der Ansprüche 6 bis 8, **dadurch gekennzeichnet, dass** die Zugriffsmittel Empfangsmittel (REC_SER) oder Sendemittel (REC_CLI) einer Zugriffsanforderung aufweisen.

10. Baugruppe nach einem der Ansprüche 6 bis 9, **dadurch gekennzeichnet, dass** die Zugriffsmittel Mittel (TENS_SER) aufweisen, mit denen die zweite Karte (212) darüber informiert werden kann, ob die erste Karte (211) aktiv ist oder nicht aktiv ist.

11. Baugruppe nach einem der Ansprüche 6 bis 9, **dadurch gekennzeichnet, dass** die Zugriffsmittel Mittel (COUT_SER, COUT CLI) zum Überwachen der Kommunikationskosten des Nutzers der ersten Mikrochip-Karte über die zweite Karte aufweisen.

12. Baugruppe nach einem der Ansprüche 6 bis 9, **dadurch gekennzeichnet, dass** die Zugriffsmittel Mittel (GEO_SER) aufweisen, mit denen
die zweite Karte über die geographische Position der ersten Karte informiert werden kann.

## Claims

1. Assembly of a plastic support and of a set of at least two microcircuit cards (211, 212) for telephony devices that are mobile one relative to the other, each of these cards constituting an identification card (211, 212) of a subscriber of a mobile telecommunications operator, these cards being precut (231, 232) in said plastic support (200) constituting a common support for these cards, at least one of said microcircuit cards (211) including means (COMP_SER) for implementing a specific function of another of the microcircuit cards, these means including a storage area (MSISDN_212) comprising an identifier of a second of said microcircuit cards (212), the cards sharing this function remaining physically connected from production to marketing.

2. Assembly according to claim 1, **characterised in that** said plastic support (200) conforms to the ID-1 format.

3. Assembly according to claim 1 or claim 2, **characterised in that** these cards conform to the ID-000 format.

4. Assembly according to any of claims 1 to 3, **characterised in that** their microcircuits form part of modules (221, 222) that are mounted on the same face of said plastic support (200).

5. Assembly according to any of claims 1 to 4, **characterised in that** said means for implementing said specific function (COMP_CLI) include means (INI_CLI) for rapid initialisation of communication between one and another of said microcircuit cards.

6. Assembly according to any of claims 1 to 5, **characterised in that** said means for implementing said specific function (COMP_SER, COMP_CLI) include access means (GEO_SER, GEO_CLI) to information specific to a first of said microcircuit cards (212) by a second of said two microcircuit cards (211).

7. Assembly according to claim 6, **characterised in that** said access means are made secure by cryptographic means (CLEF_501).

8. Assembly according to claim 6 or claim 7, **characterised in that** said access means use the SMS type protocol.

9. Assembly according to any of claims 6 to 8, **characterised in that** said access means include means (REC_SER) for receiving or (REC_CLI) for sending an access request.

10. Assembly according to any of claims 6 to 9, **characterised in that** said access means include means (TENS_SER) for informing said second card (212) whether said first card (211) is operating or not.

11. Assembly according to any of claims 6 to 9, **characterised in that** said access means include means (COUT_SER, COUT CLI) for monitoring the costs of calls of the subscriber of said first microcircuit card by said second card.

12. Assembly according to any of claims 6 to 9, **characterised in that** said access means include means (GEO_SER) for informing said second card of the geographical position of said first card.
